# EUROPEAN PATENT APPLICATION

(11) **EP 4 462 662 A1**
(43) Date of publication of application: **13.11.2024**
(21) Application number: 22943027.7
(22) Date of filing: 23.05.2022
(51) Int. Cl.: H02M 1/42

(54) **POWER SUPPLY MODULE, CONTROL CIRCUIT, AND ELECTRONIC DEVICE**

(71) Applicant: Huawei Digital Power Technologies Co., Ltd., Shenzhen, Guangdong 518043 (CN)
(72) Inventor: REN, Jie, Shenzhen, Guangdong 518043 (CN); CHU, Lili, Shenzhen, Guangdong 518043 (CN)
(74) Representative: Epping - Hermann - Fischer
(86) International application number: PCT/CN2022/094548
(87) International publication number: WO 2023/225821

(57) **Abstract**

This application provides a power module, a control circuit, and an electronic device. The power module is configured to receive an alternating current input by an alternating-current power supply. The power module includes a rectifier circuit, a valley-fill PFC circuit, a controllable switch, and a control circuit. The controllable switch is connected between one capacitor of the valley-fill PFC circuit and a reference ground, and is connected in series to a diode. The control circuit controls, depending on a type of the alternating current, the controllable switch to be turned on or off. In this application, when the power module receives a low-voltage alternating current, the valley-fill PFC circuit stops running, to improve power conversion efficiency of the power module.

## Description

### TECHNICAL FIELD

This application relates to the field of power supply technologies, and in particular, to a power module, a control circuit, and an electronic device.

### BACKGROUND

A power factor correction (Power Factor Correction, PFC) circuit usually needs to be used in an electronic device, to meet a harmonic requirement of the IEC61000-3-2 standard. However, in an application scenario in which a harmonic requirement is not high, the PFC circuit in the electronic device still works, and consequently, power conversion efficiency of the electronic device is reduced.

### SUMMARY

This application provides a power module, a control circuit, and an electronic device, to improve power conversion efficiency and applicability of the power module and the electronic device.

According to a first aspect, this application provides a power module. The power module is configured to receive an alternating current voltage input by an alternating-current power supply. The power module includes a rectifier circuit, a valley-fill power factor correction circuit, a controllable switch, and a control circuit. The rectifier circuit is configured to: rectify the alternating current voltage, and output a direct current voltage. The valley-fill power factor correction circuit is configured to adjust a power factor of the rectifier circuit. The valley-fill power factor correction circuit includes a plurality of capacitors and a plurality of diodes. In a change stage of the direct current voltage output by the rectifier circuit, the plurality of capacitors and some diodes of the plurality of diodes form a series-connected charging loop, or the plurality of capacitors and the other diodes of the plurality of diodes form parallel-connected discharging loops. The controllable switch is connected between one of the plurality of capacitors and a reference ground, and is connected in parallel to one diode. When the controllable switch is turned on, the capacitor is connected to the reference ground. When the controllable switch is turned off, the capacitor is connected to the reference ground by using the diode. The control circuit is configured to: respond to a type of the alternating current, and control, depending on the type of the alternating current, the controllable switch to be turned on or off.

The control circuit in the power module provided in this embodiment of this application controls, depending on the type of the alternating current received by the power module, the controllable switch to be turned on or off, to control operation of the valley-fill power factor correction circuit, so that the power factor correction circuit is controlled not to perform power factor correction in an application scenario with a low harmonic requirement, thereby improving power conversion efficiency of the power module.

In a first possible implementation, the control circuit is configured to control, in response to that a peak voltage of the direct current output by the rectifier circuit is less than a first voltage threshold, or in response to that a peak voltage of the alternating current received by the rectifier circuit is less than a second voltage threshold, the controllable switch to be turned on. The second voltage threshold is greater than the first voltage threshold.

When the power module provided in this embodiment of this application receives a high-voltage alternating current, the control circuit controls the controllable switch to be turned on, so that the valley-fill power factor correction circuit does not perform power factor correction. This can improve power conversion efficiency of the power module.

In a second possible implementation, the control circuit is configured to control, in response to that the peak voltage of the direct current output by the rectifier circuit is greater than the first voltage threshold, or in response to that the peak voltage of the alternating current received by the rectifier circuit is greater than the second voltage threshold, the controllable switch to be turned off.

When the power module provided in this embodiment of this application receives a high-voltage alternating current, the control circuit controls the controllable switch to be turned off, so that the valley-fill power factor correction circuit adjusts the power factor of the rectifier circuit, thereby significantly increasing a conduction angle of the input current input by the alternating-current power supply, and reducing harmonic of the power module.

In a third possible implementation, the valley-fill power factor correction circuit includes a first capacitor, a second capacitor, a first diode, a second diode, and a third diode. The first capacitor, the third diode, and the second capacitor form a series-connected charging loop. The first capacitor and the first diode form a first discharging loop, the second capacitor and the second diode form a second discharging loop, and the first discharging loop is connected in parallel to the second discharging loop.

In a fourth possible implementation, the controllable switch is connected in parallel to the first diode.

According to the power module provided in this embodiment of this application, the controllable switch may be directly connected in parallel to two ends of the existing first diode in the valley-fill power factor correction circuit, to implement controllable improvement on the valley-fill power factor correction circuit. The improved power factor correction circuit is simple in structure and easy to control. This helps improve stability of the power module.

In a fifth possible implementation, the controllable switch is a field-effect transistor.

In a sixth possible implementation, when the controllable switch is a field-effect transistor, the first diode is a parasitic diode of the field-effect transistor.

According to the power module provided in this embodiment of this application, the parasitic diode of the field-effect transistor may be used to replace the existing first diode in the valley-fill power factor correction circuit, to improve the valley-fill power factor correction circuit. The improvement manners are diversified and flexible.

In a seventh possible implementation, a capacitance value of the first capacitor is greater than or equal to a capacitance value of the second capacitor.

The capacitance value of the first capacitor in the power module provided in this embodiment of this application is greater than the capacitance value of the second capacitor. This not only facilitates miniaturization design of the power module, but also can increase a voltage that is after the first capacitor is discharged.

In an eighth possible implementation, the control circuit may detect the direct current output by the rectifier circuit or the received alternating current, and an output end of the control circuit is connected to a gate of the controllable switch.

An input end of the control circuit in the power module provided in this embodiment of this application is connected in various manners, so that flexibility is high.

In a ninth possible implementation, the valley-fill power factor correction circuit further includes a current-limiting circuit. The current-limiting circuit is connected to the gate of the controllable switch and a source or a drain of the controllable switch. The current-limiting circuit reduces a gate voltage of the controllable switch when a current of the controllable switch is greater than a current threshold.

According to the power module provided in this embodiment of this application, the current-limiting circuit may be added to the valley-fill power factor correction circuit to implement overcurrent protection on the controllable switch, so that stability of the power module is improved, and a service life of the power module is prolonged.

In a tenth possible implementation, the current-limiting circuit includes a detection resistor and a triode. The source of the controllable switch is separately connected to one end of the detection resistor and a base of the triode, the other end of the detection resistor is connected to the reference ground, the gate of the controllable switch is connected to a collector of the triode, and an emitter of the triode is connected to the reference ground.

According to the current-limiting circuit in the power module provided in this embodiment of this application, a voltage on the detection resistor is detected by using a BE junction of the triode. When the voltage on the detection resistor exceeds a turn-on voltage of the BE junction, the collector of the triode pulls down the gate voltage of the controllable switch to limit the current of the controllable switch. In this implementation, a structure of the current-limiting circuit is simple, which helps improve stability of the power module.

In an eleventh possible implementation, the current-limiting circuit includes an operational amplifier. A non-inverting input end and an output end of the operational amplifier are respectively connected to the drain and the gate of the controllable switch. When a drain-source voltage drop of the controllable switch is greater than a current-limiting threshold, the operational amplifier outputs a first voltage, to pull down the gate voltage of the controllable switch by using the first voltage, thereby limiting the current of the controllable switch.

The current-limiting circuit in the power module provided in this embodiment of this application has a simpler structure, and requires fewer components. Therefore, not only stability of the power module can be further improved, but also costs of the power module can be effectively reduced.

According to a second aspect, this application provides a control circuit used for a power module. The power module includes a rectifier circuit, a valley-fill power factor correction circuit, and a controllable switch. The rectifier circuit is configured to: rectify an alternating current voltage input by an alternating-current power supply, and output a direct current voltage. The valley-fill power factor correction circuit is configured to adjust a power factor of the rectifier circuit. The valley-fill power factor correction circuit includes a plurality of capacitors and a plurality of diodes. The plurality of capacitors and some diodes of the plurality of diodes form a series-connected charging loop, or the plurality of capacitors and the other diodes of the plurality of diodes form parallel-connected discharging loops. The controllable switch is connected between one of the plurality of capacitors and a reference ground, and is connected in parallel to one diode. When the controllable switch is turned on, the capacitor is connected to the reference ground. When the controllable switch is turned off, the capacitor is connected to the reference ground by using the diode. The control circuit is configured to: respond to a type of the alternating current, and control, depending on the type of the alternating current, the controllable switch to be turned on or off.

In a first possible implementation, the control circuit is configured to control, in response to that a peak voltage of the direct current is less than a first voltage threshold, or in response to that a peak voltage of the alternating current is less than a second voltage threshold, the controllable switch to be turned on. The second voltage threshold is greater than the first voltage threshold.

In a second possible implementation, the control circuit is configured to control, in response to that the peak voltage of the direct current is greater than the first voltage threshold, or in response to that the peak voltage of the alternating current is greater than the second voltage threshold, the controllable switch to be turned off.

In a third possible implementation, the control circuit includes a controllable switch, and the controllable switch is connected in parallel to the first diode.

In a fourth possible implementation, the controllable switch is a field-effect transistor.

In a fifth possible implementation, when the controllable switch is a field-effect transistor, the first diode is a parasitic diode of the field-effect transistor.

According to a third aspect, this application provides an electronic device. The electronic device includes the power module provided in any one of the first aspect or the possible implementations of the first aspect, or includes the power module provided in any one of the second aspect or the possible implementations of the second aspect.

It should be understood that, for implementations and beneficial effect of the foregoing plurality of aspects or any possible implementation of this application, reference may be made to each other.

### BRIEF DESCRIPTION OF DRAWINGS

FIG. 1 is a schematic of a structure of an electronic device according to this application;
FIG. 2 is another schematic of a structure of an electronic device according to this application;
FIG. 3 is a schematic of an application scenario of an electronic device according to this application;
FIG. 4 is a schematic of a structure of a power module according to this application;
FIG. 5A is another schematic of a structure of a power module according to this application;
FIG. 5B is another schematic of a structure of a power module according to this application;
FIG. 6 is a schematic of a circuit when a power module receives a low-voltage alternating current according to this application;
FIG. 7 is a schematic of a running process when a power module receives a low-voltage alternating current according to this application;
FIG. 8 is a schematic of a circuit when a power module receives a high-voltage alternating current according to this application;
FIG. 9 is a schematic of a running process when a power module receives a high-voltage alternating current according to this application;
FIG. 10 is another schematic of a structure of a power module according to this application;
FIG. 11 is another schematic of a structure of a power module according to this application;
FIG. 12 is another schematic of a structure of a power module according to this application;
FIG. 13 is another schematic of a structure of a power module according to this application;
FIG. 14 is another schematic of a structure of a power module according to this application; and
FIG. 15 is still another schematic of a structure of a power module according to this application.

### DESCRIPTION OF EMBODIMENTS

An electronic device provided in this application is configured to convert 220 VAC or 110 VAC household electricity into a voltage and a current that are applicable to different types of electronic devices or the electronic device. The electronic device provided in this application may be a power adapter (adaptor) of different types of electronic devices such as a smartphone, a tablet computer, a notebook computer, a desktop computer, a smart speaker, a smartwatch, and a wearable device, or may be different types of electronic devices such as a smartphone, a tablet computer, a notebook computer, a desktop computer, a smart speaker, a smartwatch, and a wearable device. The electronic device provided in this application may be a charging pile of an electric vehicle such as an electric motorcycle or an electric automobile, or may be an electric vehicle such as an electric motorcycle or an electric automobile.

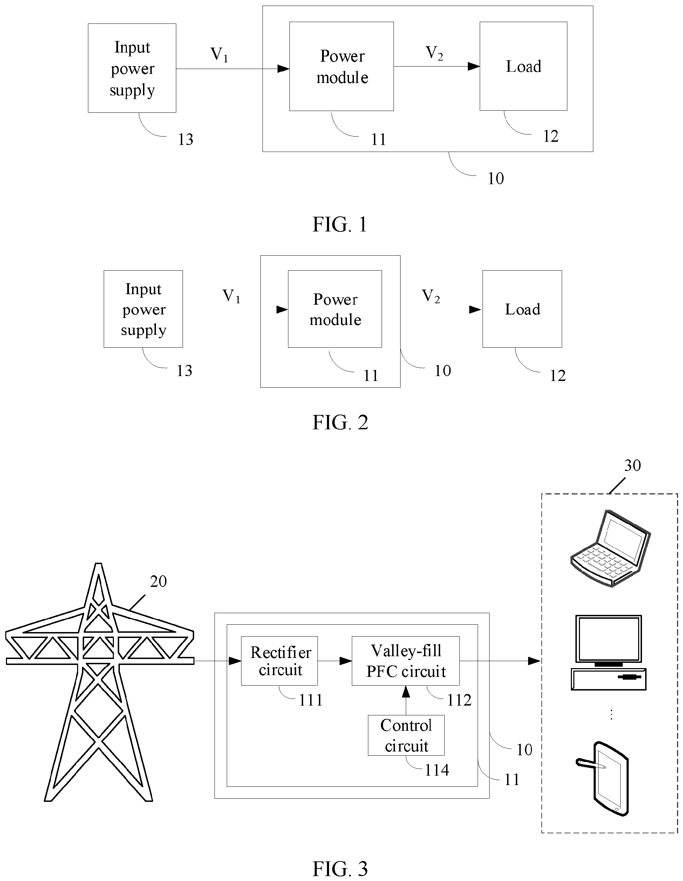

FIG. 1 is a schematic of a structure of an electronic device according to this application. As shown in FIG. 1, an electronic device 10 includes a power module 11 and a load 12. The power module 11 receives an input voltage V₁ provided by an input power supply 13, and provides an output voltage V₂ to supply power to the load 12. In this embodiment of this application, the electronic device 10 may be an electronic device such as a smartphone, a tablet computer, a notebook computer, a desktop computer, a smart speaker, a smartwatch, or a wearable device.

FIG. 2 is another schematic of a structure of an electronic device according to this application. As shown in FIG. 2, an electronic device 10 includes a power module 11. The power module 11 receives an input voltage V₁ provided by an input power supply 13, and provides an output voltage V₂ to supply power to a load 12. In this embodiment of this application, the electronic device 10 may be a device such as an adapter or a charging pile. Generally, the adapter (adaptor) may also be referred to as a charger (charger), a charging head, a switching power supply (switch power supply), a power converter (power converter), or the like.

In an embodiment, the electronic device 10 may include the input power supply 13. The input power supply 13 may include an alternating-current power supply. In an embodiment, the electronic device 10 includes a plurality of power modules 11, and the plurality of power modules 11 may provide a plurality of output voltages V₂ to supply power to the load 12. In an embodiment, the power module 11 in the electronic device 10 may provide a plurality of output voltages V₂ to supply power to a plurality of loads 12 respectively. In an embodiment, the electronic device 10 may include a plurality of power modules 11, and the plurality of power modules 11 provide output voltages V₂ for a plurality of loads 12 respectively. In an embodiment, the electronic device 10 may receive a plurality of input power supplies 13. In an embodiment, the load 12 may be an electronic device such as a mobile phone, a computer, a tablet, or a home appliance. In an embodiment, the load 12 includes an internal circuit of the electronic device 10 or an external electronic device of the electronic device 10.

FIG. 3 is a schematic of an application scenario of an electronic device according to this application. An electronic device 10 shown in FIG. 3 may be the electronic device 10 shown in FIG. 1 or FIG. 2. A load 30 shown in FIG. 3 may be the load 12 shown in FIG. 1 or FIG. 2. As shown in FIG. 3, an electronic device 10 includes a power module 11. The power module 11 includes a rectifier circuit 111, a valley-fill PFC circuit 112, and a control circuit 114. The rectifier circuit 111 is configured to: receive and rectify an alternating current provided by an input power supply 20, and output a direct current. The valley-fill PFC circuit 112 is configured to adjust a power factor of the rectifier circuit 111. The control circuit 114 is configured to control operation of the valley-fill PFC circuit 112. In an embodiment, the input power supply 20 may be an alternating current power grid.

In this embodiment of this application, the alternating current provided by the input power supply 20 includes two types: a high-voltage alternating current and a low-voltage alternating current. In this embodiment of this application, a voltage range of the low-voltage alternating current is from a first low voltage to a second low voltage, and a voltage range of the high-voltage alternating current is from a first high voltage to a second high voltage. The second low voltage is greater than the first low voltage, the first high voltage is greater than the second low voltage, and the second high voltage is greater than the first high voltage. For example, the voltage range of the low-voltage alternating current is from 90 VAC to 132 VAC, and the voltage range of the high-voltage alternating current is from 176 VAC to 264 VAC.

In response to that the input power supply 20 provides the high-voltage alternating current, the control circuit 114 controls the valley-fill PFC circuit 112 to perform power factor correction on the rectifier circuit 111. In response to that the input power supply 20 provides the low-voltage alternating current, the control circuit 114 controls the valley-fill PFC circuit 112 not to perform power factor correction on the rectifier circuit 111.

According to the power module, the control circuit, and the electronic device using the power module and the control circuit provided in embodiments of this application, operation of the valley-fill power factor correction circuit may be controlled depending on the type of the alternating current. The valley-fill power factor correction circuit does not perform power factor correction when the low-voltage alternating current is received, so that power conversion efficiency of the power module and the electronic device using the power module can be improved. The foregoing is merely an example of the application scenario of the electronic device provided in this application, and is not exhaustive. The application scenario is not limited in this application.

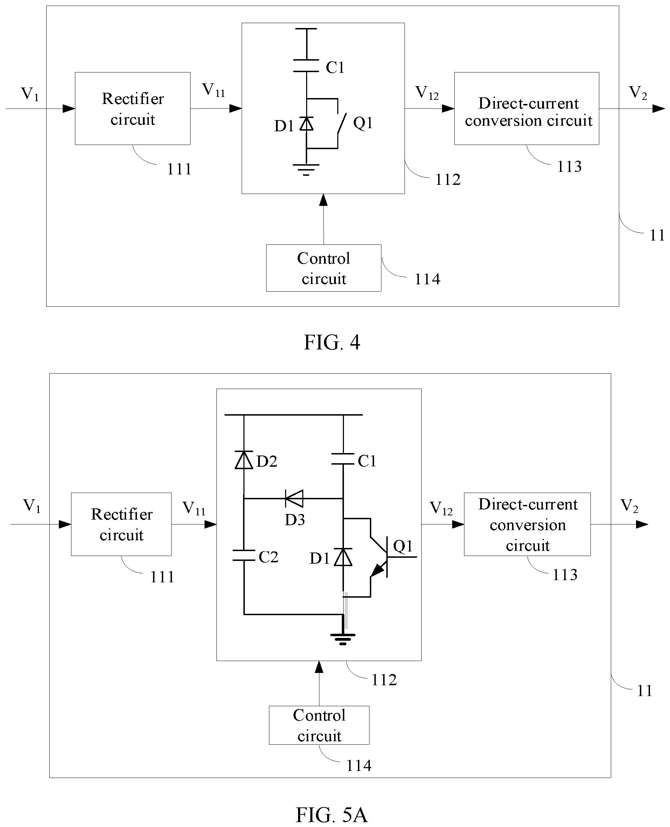

The following describes, with reference to FIG. 4 to FIG. 13, working principles of an electronic device, a power module, and a control circuit provided in this application by using examples.

FIG. 4 is a schematic of a structure of a power module according to this application. As shown in FIG. 4, a power module 11 includes a rectifier circuit 111, a valley-fill PFC circuit 112, a controllable switch Q1, and a control circuit 114.

The rectifier circuit 111 is configured to: receive an input alternating current V₁, rectify the alternating current V₁, and output a direct current V_{11.} For example, the rectifier circuit 111 includes four rectifier diodes. The four rectifier diodes form a full-bridge rectifier circuit.

The valley-fill PFC circuit 112 is configured to adjust a power factor of the rectifier circuit 111. The valley-fill PFC circuit 112 includes a plurality of capacitors and a plurality of diodes. The plurality of capacitors and the plurality of diodes may form a series-connected charging loop and parallel-connected discharging loops. Specifically, the plurality of capacitors and some diodes of the plurality of diodes form a series-connected charging loop, or the plurality of capacitors and the other diodes than the some diodes of the plurality of diodes form parallel-connected discharging loops.

For example, the valley-fill PFC circuit 112 may include two capacitors and three diodes. When the direct current V₁₁ output by the rectifier circuit 111 is in a rising stage or before the direct current V₁₁ falls from a peak voltage to half of the peak voltage, the two capacitors and one diode form a series-connected charging loop. When the direct current V₁₁ output by the rectifier circuit 111 continues to fall from half of the peak voltage, the two capacitors and the other two diodes form discharging loops that are connected in parallel.

The controllable switch Q1 is connected between one capacitor in the valley-fill PFC circuit 112 and a reference ground, and is connected in parallel to one diode. When the controllable switch Q1 is turned on, the capacitor is connected to the reference ground. When the capacitor is connected to the reference ground, the capacitor performs charging or discharging depending on a voltage change of the direct current output by the rectifier circuit 111, and the PFC circuit 112 does not perform power factor correction. When the controllable switch Q1 is turned off, the capacitor is disconnected from the reference ground, and the PFC circuit 112 performs power factor correction.

The control circuit 114 is configured to control operation of the valley-fill PFC circuit 112. Specifically, the control circuit 114 is configured to control the controllable switch Q1 to be turned on or off. The control circuit 114 controls the controllable switch Q1 to be turned off, and the valley-fill PFC circuit 112 performs power factor correction on the rectifier circuit 111. The control circuit 114 controls the controllable switch Q1 to be turned on, and the valley-fill PFC circuit 112 does not perform power factor correction.

In an embodiment, the power module 11 further includes a direct-current conversion circuit 113. As shown in FIG. 4, the direct-current conversion circuit 113 is configured to: perform direct-current conversion on a direct current V₁₂ output by the valley-fill PFC circuit 112, and then provide an output voltage V₂ to supply power to a load. In this embodiment of this application, the direct-current conversion circuit 113 may include an asymmetric half-bridge (asymmetrical half-bridge, AHB) conversion circuit, an active clamp flyback (active clamp flyback, ACF) conversion circuit, a buck circuit, a buck-boost circuit, and the like.

In this embodiment of this application, the control circuit 114 controls operation of the valley-fill PFC circuit 112 based on a type of the alternating current V₁ received by the rectifier circuit 111. Specifically, the control circuit 114 controls, depending on the type of the alternating current V₁ received by the rectifier circuit 111, the controllable switch Q1 to be turned on or off. In this embodiment of this application, the type of the alternating current V₁ received by the rectifier circuit 111 is a low-voltage alternating current or a high-voltage alternating current.

In this embodiment of this application, a voltage range of the low-voltage alternating current is from a first low voltage to a second low voltage, and a voltage range of the high-voltage alternating current is from a first high voltage to a second high voltage. The second low voltage is greater than the first low voltage, the first high voltage is greater than the second low voltage, and the second high voltage is greater than the first high voltage. For example, the voltage range of the low-voltage alternating current is from 90 VAC to 132 VAC, and the voltage range of the high-voltage alternating current is from 176 VAC to 264 VAC. In response to that the type of the alternating current V₁ received by the rectifier circuit 111 is the high-voltage alternating current, the control circuit 114 controls the controllable switch Q1 to be turned off, and the valley-fill PFC circuit 112 performs power factor correction. In response to that the type of the alternating current V₁ received by the rectifier circuit 111 is the low-voltage alternating current, the control circuit 114 controls the controllable switch Q1 to be turned on, and the valley-fill PFC circuit 112 performs power factor correction.

In this embodiment of this application, the power module 11 may determine, based on the peak voltage of the direct current V₁₁ output by the rectifier circuit 111 or a peak voltage of the alternating current V₁ received by the rectifier circuit 111, the type of the alternating current V₁ received by the rectifier circuit 111, to control operation of the valley-fill PFC circuit 112.

In an embodiment, in response to that the peak voltage of the direct current V₁₁ output by the rectifier circuit 111 is less than a first voltage threshold, the control circuit 114 controls the controllable switch Q1 to be turned on.

In an embodiment, in response to that the peak voltage of the alternating current V₁ received by the rectifier circuit 111 is less than a second voltage threshold, the control circuit 114 controls the controllable switch Q1 to be turned on. In an embodiment, in response to that the peak voltage of the direct current V₁₁ output by the rectifier circuit 111 is greater than the first voltage threshold, the control circuit 114 controls the controllable switch Q1 to be turned off.

In an embodiment, in response to that the peak voltage of the alternating current V₁ received by the rectifier circuit 111 is greater than the second voltage threshold, the control circuit 114 controls the controllable switch Q1 to be turned off.

In this embodiment of this application, a voltage range of the low-voltage alternating current is from a first low voltage to a second low voltage, and a voltage range of the high-voltage alternating current is from a first high voltage to a second high voltage. The second low voltage is greater than the first low voltage, the first high voltage is greater than the second low voltage, and the second high voltage is greater than the first high voltage. A range of a peak voltage of a direct current obtained after rectification on the low-voltage alternating current is from 1.414 times of the first low voltage to 1.141 times of the second low voltage, and a range of a peak voltage after rectification on the high-voltage alternating current is from 1.414 times of the first high voltage to 1.414 times of the second high voltage. Correspondingly, the first voltage threshold may be any value greater than 1.141 times of the second low voltage and less than 1.414 times of the first high voltage. The second voltage threshold may be any value greater than the first low voltage and less than the first high voltage.

For example, the voltage range of the low-voltage alternating current is from 90 VAC to 132 VAC, and the voltage range of the high-voltage alternating current is from 176 VAC to 264 VAC. The range of the peak voltage after rectification on the low-voltage alternating current is from 1.414 times of 90 V to 1.141 times of 132 V, and the range of the peak voltage after rectification on the high-voltage alternating current is from 1.414 times of 176 V to 1.414 times of 264 V Correspondingly, the first voltage threshold may be any value greater than 1.141 times of 132 V and less than 1.414 times of 176 V The second voltage threshold may be any value greater than 132 V and less than 176 V

When the power module provided in this embodiment of this application receives the low-voltage alternating current, the control circuit controls the valley-fill power factor correction circuit not to adjust the power factor of the rectifier circuit, so that power conversion efficiency of the power module and an electronic device using the power module can be improved. In addition, the power module provided in this embodiment of this application may further increase a minimum value of the input voltage of the direct-current conversion circuit, so that the power module can use various types of direct-current conversion circuits, thereby improving applicability of the power module and the electronic device in which the power module is located.

FIG. 5A is another schematic of a structure of a power module according to this application. As shown in FIG. 5A, a power module 11 includes a rectifier circuit 111, a valley-fill PFC circuit 112, a direct-current conversion circuit 113, a control circuit 114, and a controllable switch Q1. For specific functions of the rectifier circuit 111 and the direct-current conversion circuit 113, reference may be made to descriptions of corresponding parts in the embodiment shown in FIG. 4. Details are not described herein again.

As shown in FIG. 5A, the valley-fill PFC circuit 112 includes two capacitors (a first capacitor C1 and a second capacitor C2) and three diodes (a first diode D1, a second diode D2, and a third diode D3). The two capacitors (the first capacitor C1 and the second capacitor C2) and the three diodes (the first diode D1, the second diode D2, and the third diode D3) may form a serial-connected charging loop and parallel-connected discharging loops. Specifically, when the direct current V₁₁ output by the rectifier circuit 111 is in a rising stage or before the direct current V₁₁ falls from a peak voltage to half of the peak voltage, the first capacitor C1, the third diode D3, and the second capacitor C2 form a charging loop. When the direct current V₁₁ output by the rectifier circuit 111 continues to fall from half of the peak voltage, the first capacitor C1 and the first diode D1 form a first discharging loop, and the second capacitor C2 and the second diode D2 form a second discharging loop. The first discharging loop is connected in parallel to the second loop.

The controllable switch Q1 is connected between the first capacitor C1 of the valley-fill PFC circuit 112 and a reference ground, and is connected in parallel to the first diode D1. The control circuit 114 controls, depending on a type of the alternating current V₁ received by the rectifier circuit 111, the controllable switch Q1 to be turned on or off. When the controllable switch Q1 is turned on, the valley-fill PFC circuit 112 does not perform power factor correction. When the controllable switch Q1 is turned off, the valley-fill PFC circuit 112 performs power factor correction.

When the controllable switch Q1 is turned on, the first capacitor C1 is connected to the reference ground. The first capacitor C1 is charged when the direct current V₁₁ output by the rectifier circuit 111 is in the rising stage; and the first capacitor C1 is discharged when the direct current V₁₁ output by the rectifier circuit 111 is in a falling stage. Specifically, the first capacitor C1 is charged before the direct current V₁₁ output by the rectifier circuit 111 rises to the peak voltage, and the first capacitor C1 is discharged when the direct current V₁₁ output by the rectifier circuit 111 falls from the peak voltage.

When the controllable switch Q1 is turned off, the capacitor C1 is disconnected from the reference ground. When the direct current V₁₁ output by the rectifier circuit 111 is in the rising stage or before the direct current V₁₁ falls from the peak voltage to half of the peak voltage, the first capacitor C1, the third diode D3, and the second capacitor C2 form a series-connected charging loop. When the direct current V₁₁ output by the rectifier circuit 111 continues to fall from half of the peak voltage, the first capacitor C1 and the first diode D1 form a first discharging loop, and the second capacitor C2 and the second diode D2 form a second discharging loop. The first discharging loop is connected in parallel to the second loop.

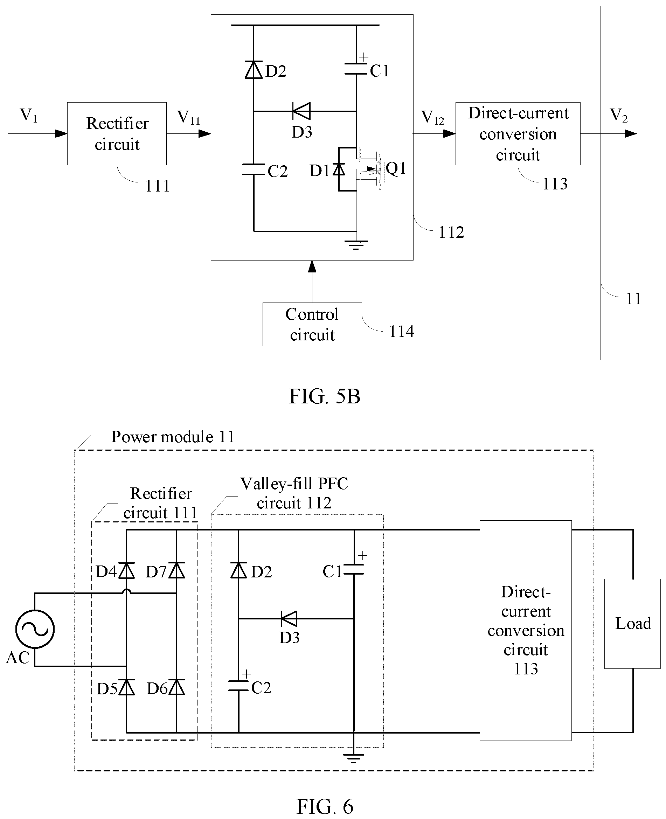

FIG. 5B is another schematic of a structure of a power module according to this application. As shown in FIG. 5B, a power module 11 includes a rectifier circuit 111, a valley-fill PFC circuit 112, a direct-current conversion circuit 113, a control circuit 114, and a field-effect transistor Q1. A part in FIG. 5B that is the same as that in FIG. 5A is not described herein again.

As shown in FIG. 5B, the valley-fill PFC circuit 112 includes two capacitors and three diodes. For example, the valley-fill PFC circuit 112 includes a first capacitor C1, a second capacitor C2, a first diode D1, a second diode D2, and a third diode D3. In an embodiment, the first diode D1 in the valley-fill PFC circuit 112 may be a parasitic diode of the field-effect transistor Q1. Specifically, the parasitic diode D1 of the field-effect transistor Q1 in FIG. 5B may replace the first diode D1 in FIG. 5A. In this embodiment of this application, the field-effect transistor Q1 may be any one of a metal-oxide semiconductor field-effect transistor (metal oxide semiconductor field effect transistor, MOSFET), an insulated gate bipolar transistor (Insulated Gate Bipolar Transistor, IGBT), or a gallium nitride (Gallium Nitride, GaN) transistor. In this embodiment of this application, the field-effect transistor Q1 is described by using the MOSFET as an example. In an embodiment, the first diode D1 in the valley-fill PFC circuit 112 is connected in parallel to the parasitic diode of the field-effect transistor Q1.

The field-effect transistor Q1 is connected between the first capacitor C1 in the valley-fill PFC circuit 112 and a reference ground. The control circuit 114 controls, based on a type of an alternating current V₁ received by the rectifier circuit 111, the field-effect transistor Q1 to be conducted or cut off. When the field-effect transistor Q1 is conducted, the valley-fill PFC circuit 112 does not perform power factor correction. When the field-effect transistor Q1 is cut off, the valley-fill PFC circuit 112 performs power factor correction.

When the field-effect transistor Q1 is conducted, the capacitor C1 is connected to the reference ground. The first capacitor C1 is charged when a voltage of a direct current V₁₁ output by the rectifier circuit 111 rises; and the first capacitor C1 is discharged when the voltage of the direct current V₁₁ output by the rectifier circuit 111 falls. Specifically, the first capacitor C1 is charged before the voltage of the direct current V₁₁ output by the rectifier circuit 111 rises to a peak voltage, and the first capacitor C1 is discharged when the voltage of the direct current V₁₁ output by the rectifier circuit 111 falls from the peak voltage.

When the field-effect transistor Q1 is cut off, the first capacitor C1 is disconnected from the reference ground. In an embodiment, the first capacitor C1 is connected to the reference ground by using the first diode D1. In an embodiment, the first capacitor C1 is connected to the reference ground by using the parasitic diode D1 of the field-effect transistor Q1. When the voltage of the direct current V₁₁ output by the rectifier circuit 111 is in a rising stage or before the direct current V₁₁ falls from the peak voltage to half of the peak voltage, the first capacitor C1, the third diode D3, and the second capacitor C2 form a charging loop. When the voltage of the direct current V₁₁ output by the rectifier circuit 111 continues to fall from half of the peak voltage, the first capacitor C1 and the parasitic diode D1 form a first discharging loop, and the second capacitor C2 and the second diode D2 form a second discharging loop.

As shown in FIG. 5A and FIG. 5B, when the power module 11 provided in embodiments of this application receives a low-voltage alternating current, the control circuit 114 controls the valley-fill PFC circuit 112 not to perform power factor correction, so that power conversion efficiency of the power module 11 can be improved. When the power module 11 receives a high-voltage alternating current, the control circuit 114 controls the valley-fill PFC circuit 112 to perform power factor correction, so that a harmonic limit requirement may be met.

Specifically, when the alternating current V₁ received by the rectifier circuit 111 is a high-voltage alternating current, the control circuit 114 controls the controllable switch to be turned off or the field-effect transistor Q1 to be cut off, and the valley-fill PFC circuit 112 performs power factor correction. When the alternating current V₁ received by the rectifier circuit 111 is a low-voltage alternating current, the control circuit 114 controls the controllable switch to be turned on or the field-effect transistor Q1 to be conducted, and the valley-fill PFC circuit 112 does not perform power factor correction.

In this embodiment of this application, the power module 11 may determine, based on the peak voltage of the direct current V₁₁ output by the rectifier circuit 111 or a peak voltage of the alternating current V₁ received by the rectifier circuit 111, the type of the alternating current V₁ received by the rectifier circuit 111, to control operation of the valley-fill PFC circuit 112.

In an embodiment, in response to that the peak voltage of the direct current V₁₁ output by the rectifier circuit 111 is less than a first voltage threshold, the control circuit 114 controls the controllable switch Q1 to be turned on.

In an embodiment, in response to that the peak voltage of the alternating current V₁ received by the rectifier circuit 111 is less than a second voltage threshold, the control circuit 114 controls the controllable switch Q1 to be turned on. In an embodiment, in response to that the peak voltage of the direct current V₁₁ output by the rectifier circuit 111 is greater than the first voltage threshold, the control circuit 114 controls the controllable switch Q1 to be turned off.

In an embodiment, in response to that the peak voltage of the alternating current V₁ received by the rectifier circuit 111 is greater than the second voltage threshold, the control circuit 114 controls the controllable switch Q1 to be turned off.

The controllable switch or the field-effect transistor Q1 in this application may be located outside the control circuit 114, or may be located inside the control circuit 114. The control circuit 114 in this application may be located inside the power module 11, or may be located outside the power module 11. This is not limited in this application.

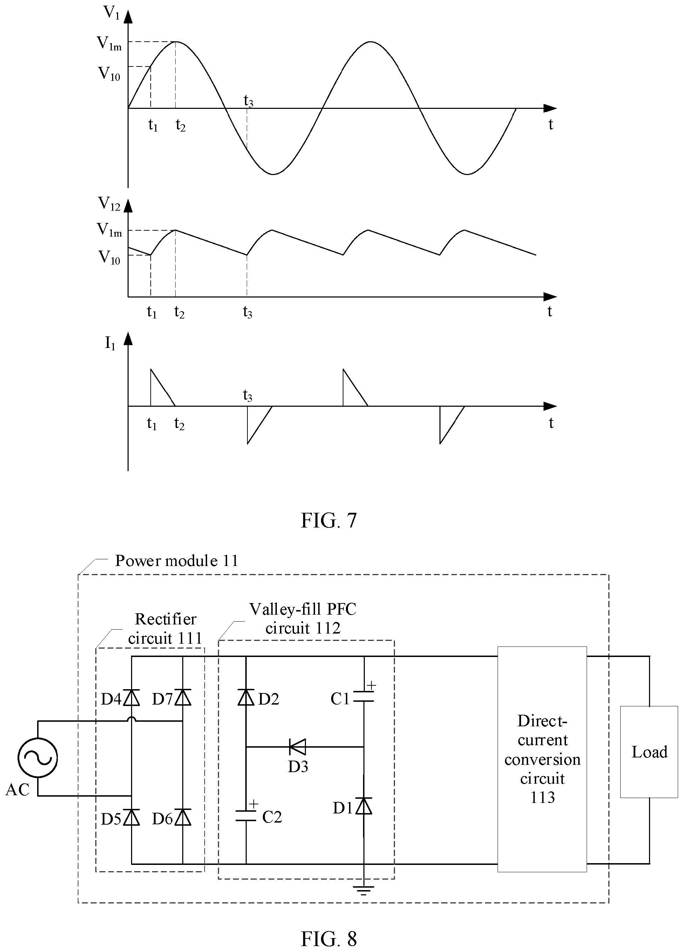

FIG. 6 is a schematic of a circuit when a power module receives a low-voltage alternating current according to this application. In an embodiment, when an alternating current V₁ received by a rectifier circuit 111 is a low-voltage alternating current, a peak voltage of the alternating current V₁ received by the rectifier circuit 111 is less than a second threshold. In an embodiment, when the alternating current V₁ received by the rectifier circuit 111 is a low-voltage alternating current, a peak voltage of a direct current V₁₁ output by the rectifier circuit 111 is less than a first threshold voltage. Correspondingly, in response to that the peak voltage of the direct current V₁₁ output by the rectifier circuit 111 is less than the first threshold voltage or the peak voltage of the alternating current V₁ received by the rectifier circuit 111 is less than the second threshold voltage, a control circuit 114 controls a controllable switch to be turned on or a field-effect transistor Q1 to be conducted. As shown in FIG. 7, the alternating current V₁ received by the power module 11 is a low-voltage alternating current, the controllable switch or the field-effect transistor Q1 in the power module 11 is turned on/conducted, the first capacitor C1 is connected to the reference ground, and the valley-fill PFC circuit 112 does not perform power factor correction.

FIG. 7 is a schematic of a running process when a power module receives a low-voltage alternating current according to this application.

After a moment t₁, the first capacitor C1 in the valley-fill PFC circuit 112 starts to be charged, and a voltage of the first capacitor C1 starts to rise from V₁₀. Correspondingly, an output voltage V₁₂ of the valley-fill PFC circuit 112 starts to rise from V₁₀.

At a moment t₂, the voltage of the first capacitor C1 rises to a peak voltage V₁ₘ of the alternating current V₁ received by the rectifier circuit 111, and the output voltage V₁₂ of the valley-fill PFC circuit 112 rises to the peak voltage V₁ₘ. Correspondingly, a waveform of an input current I₁ of the rectifier circuit 111 from the moment t₁ to the moment t₂ is a sawtooth wave.

After the moment t₂, the voltage of the alternating current V₁ received by the rectifier circuit 111 starts to fall from the peak voltage V₁ₘ. Correspondingly, the first capacitor C1 starts to be discharged, the voltage of the first capacitor C1 starts to fall from the peak voltage V₁ₘ, and the output voltage V₁₂ of the valley-fill PFC circuit 112 starts to fall from the peak voltage V₁ₘ.

At a moment t₃, the voltage of the first capacitor C1 falls from the peak voltage V₁ₘ to V₁₀, and the capacitor C1 stops being discharged. Correspondingly, the output voltage V₁₂ of the valley-fill PFC circuit 112 falls to V₁₀. Correspondingly, the input current I₁ of the rectifier circuit 111 is 0 from the moment t₂ to the moment t₃.

It can be learned from the waveform of the input current I₁ of the rectifier circuit 111 that a conduction angle of the input current I₁ does not increase, and the valley-fill PFC circuit 112 does not adjust the power factor of the rectifier circuit 111. Therefore, power conversion efficiency of the power module 11 is improved.

The valley-fill PFC circuit 112 of the power module 11 provided in this embodiment of this application does not perform power factor correction when the rectifier circuit 111 receives the low-voltage alternating current, so that efficiency of the power module 11 can be improved. In addition, after the controllable switch or the field-effect transistor Q1 in the power module 11 provided in this embodiment of this application is turned on/conducted, only the first capacitor C1 in the valley-fill PFC circuit works, and an initial discharging voltage of the first capacitor C1 is raised to the peak voltage of the input voltage of the rectifier circuit 111. Therefore, the capacitor in the valley-fill PFC circuit 112 may raise a minimum value of the output voltage of the rectifier circuit 111, so that various types of direct-current conversion circuits 113 are applicable, thereby improving applicability of the power module 11 and the electronic device 10 in which the power module 11 is located.

The control circuit 114 provided in this embodiment of this application may control operation of the valley-fill PFC circuit 112 depending on the type of the alternating current received by the rectifier circuit 111, and when the rectifier circuit 111 receives the low-voltage alternating current, control the valley-fill PFC circuit 112 not to perform power factor correction, so that efficiency of the power module 11 can be improved. In addition, the control circuit 114 provided in this embodiment of this application may control the controllable switch to be turned on or the field-effect transistor Q1 to be conducted, to increase a minimum value of the input voltage of the direct-current conversion circuit 113. This helps the power module 11 and the electronic device 10 in which the power module 11 is located use various types of direct-current conversion circuits 113, thereby improving applicability of the power module 11 and the electronic device 10 in which the power module 11 is located.

FIG. 8 is a schematic of a circuit when a power module receives a high-voltage alternating current according to this application. In an embodiment, an alternating current V₁ received by a rectifier circuit 111 is a high-voltage alternating current, a peak voltage of a direct current V₁₁ output by the rectifier circuit 111 is greater than a first voltage threshold, and a peak voltage of the alternating current V₁ received by the rectifier circuit 111 is greater than a second voltage threshold. In an embodiment, in response to that the peak voltage of the direct current V₁₁ output by the rectifier circuit 111 is greater than the first voltage threshold, a control circuit 114 controls a controllable switch to be turned off or a field-effect transistor Q1 to be cut off. In an embodiment, in response to that the peak voltage of the alternating current V₁ received by the rectifier circuit 111 is greater than the second voltage threshold, the control circuit 114 controls the controllable switch to be turned off or the field-effect transistor Q1 to be cut off. As shown in FIG. 8, the alternating current V₁ received by the power module 11 is a high-voltage alternating current, the controllable switch or the field-effect transistor Q1 in the power module 11 is turned/cut off, a first capacitor C1 is connected to a reference ground by using the first diode D1, and a valley-fill PFC circuit 112 performs power factor correction.

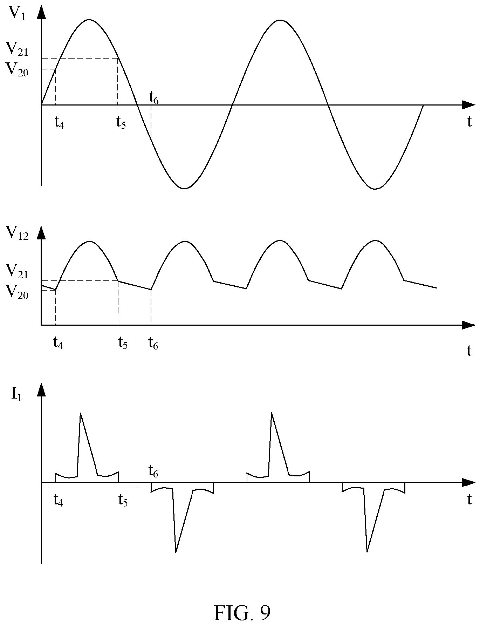

FIG. 9 is a schematic of a running process when a power module receives a high-voltage alternating current according to this application.

After a moment t₄, a voltage of the direct current V₁₁ output by the rectifier circuit 111 starts to rise from V₂₀, the first capacitor C1, a third diode D3, and a second capacitor C2 form a series-connected charging loop, and the first capacitor C1 and the second capacitor C2 start to be charged. A sum of a voltage of the first capacitor C1 and a voltage of the second capacitor C2 rises from V₂₀ to the peak voltage. Correspondingly, an output voltage V₁₂ of the valley-fill PFC circuit 112 rises from V₂₀ to the peak voltage.

At a moment t₅, the output voltage V₁₂ of the valley-fill PFC circuit 112 falls to V₂₁. V₂₁ is approximately equal to half of the peak voltage of the input voltage V₁ of the rectifier circuit 111. Correspondingly, a conduction angle of an input current I₁ of the rectifier circuit 111 increases from the moment t₄ to the moment t₅. Therefore, harmonic of the input current I₁ of the rectifier circuit 111 decreases, so that an objective of performing power factor correction on the rectifier circuit 111 is achieved.

After the moment t₅, the output voltage V₁₂ of the rectifier circuit 111 further falls from V₂₁, the first capacitor C1 and the second diode D1 form a first discharging loop, and the second capacitor C2 and the second diode D2 form a second discharging loop. The first capacitor C1 and the second capacitor C2 start to be discharged.

At a moment t₆, the first capacitor C1 and the second capacitor C2 stop being discharged. The output voltage V₁₂ of the valley-fill PFC circuit 112 no longer falls. Correspondingly, the input current I₁ of the rectifier circuit 111 is 0 from the moment t₅ to the moment t₆.

When the power module 11 and an electronic device 10 using the power module 11 provided in embodiments of this application receive a high-voltage alternating current, the valley-fill PFC circuit 112 performs power factor correction on the rectifier circuit 111, to reduce power consumption of the power module 11 and the electronic device 10 using the power module 11. In addition, the valley-fill PFC circuit 112 performs power factor correction on the rectifier circuit 111 when the high-voltage alternating current is received, so that a minimum value of the input voltage of the direct-current conversion circuit 113 may be kept greater than 100 V Therefore, according to the power module 11 provided in this embodiment of this application, various types of direct-current conversion circuits are applicable, so that applicability of the power module 11 and the electronic device 10 in which the power module 11 is located is improved.

In this embodiment of this application, a capacitance value of the first capacitor C1 is greater than or equal to a capacitance value of the second capacitor C2. The capacitance value of the capacitor affects a discharging speed of the capacitor. Specifically, the capacitance value of the first capacitor C1 affects a falling speed of a voltage of the first capacitor C1 during turn-on of the controllable switch or the field-effect transistor Q1. For example, a voltage of the alternating current V₁ received by the rectifier circuit 111 is 90 VAC, both the capacitance value of the first capacitor C1 and the capacitance value of the second capacitor C2 are 100 µF, and a voltage of the first capacitor C1 at the end of discharging is 70 V to 80 V The capacitance value of the first capacitor C1 is 150 µF, the capacitance value of the second capacitor C2 is 50 µF, and a voltage of the first capacitor C1 at the end of discharging is 80 V to 90 V In addition, capacitance values of the first capacitor C1 and the second capacitor C2 affect a volume of the power module 11. Specifically, larger capacitance values of the first capacitor C1 and the second capacitor C2 indicate a larger volume of the power module 11. Therefore, the capacitance value of the first capacitor C1 is greater than the capacitance value of the second capacitor C2, which is conducive to reducing the volume of the power module 11 and facilitating miniaturization design of the power module 11 and the electronic device 10 using the power module 11. When the power module 11 provided in this embodiment of this application receives the low-voltage alternating current, the valley-fill PFC circuit 112 does not perform power factor correction on the rectifier circuit 111, so that power conversion efficiency of the power module 11 can be improved. When the power module 11 provided in this embodiment of this application receives the high-voltage alternating current, the valley-fill PFC circuit 112 adjusts the power factor of the rectifier circuit 111, which helps the power module 11 and the electronic device 10 using the power module 11 meet a harmonic limit requirement. In addition, the power module 11 provided in this embodiment of this application may further increase a minimum value of the input voltage of the direct-current conversion circuit 113, which helps improve applicability of the power module 11 and the electronic device 10 using the power module 11.

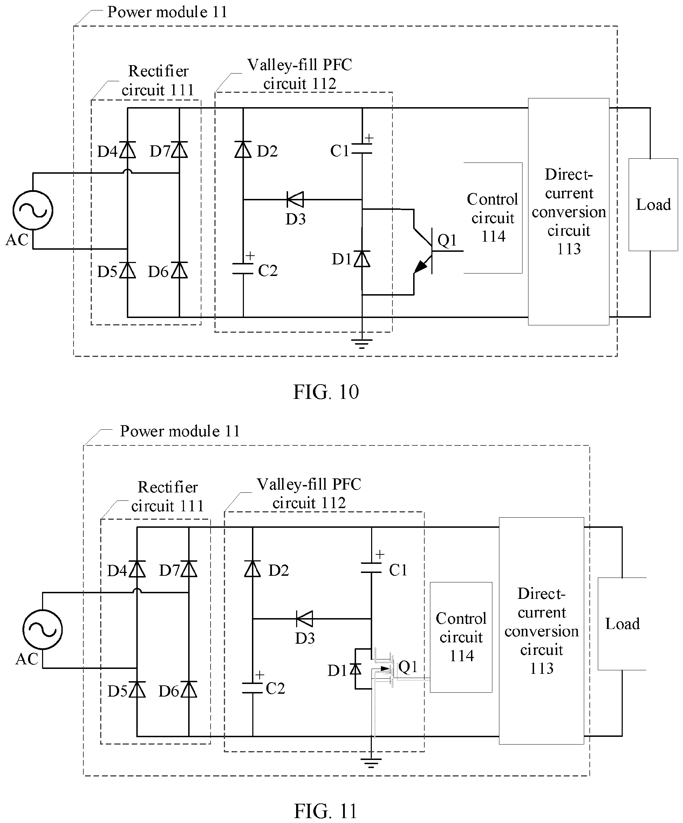

FIG. 10 is another schematic of a structure of a power module according to this application. As shown in FIG. 10, a power module 11 includes a rectifier circuit 111, a valley-fill PFC circuit 112, a direct-current conversion circuit 113, a controllable switch Q1, and a control circuit 114. The rectifier circuit 111 is configured to: receive and rectify an alternating current V₁, and output a direct current V₁₁. The valley-fill PFC circuit 112 is configured to adjust a power factor of the rectifier circuit 111. The direct-current conversion circuit 113 is configured to: receive a direct current V₁₂ output by the valley-fill PFC circuit 112, and supply power to a load after voltage conversion. The control circuit 114 is configured to control operation of the valley-fill PFC circuit 112.

The rectifier circuit 111 includes four rectifier diodes (D4, D5, D6, and D7). The four rectifier diodes (D4, D5, D6, and D7) form a full-bridge rectifier circuit. A joint between an anode of the diode D4 and a cathode of the diode D5, and a joint between an anode of the diode D7 and a cathode of the diode D6 respectively form two input ends of the rectifier circuit 111. After a cathode of the diode D4 is connected to a cathode of the diode D7, a positive output end of the rectifier circuit 111 is formed. After an anode of the diode D5 is connected to the anode of the diode D7, a negative output end of the rectifier circuit 111 is formed. The negative output end of the rectifier circuit 111 is connected to a reference ground. The alternating current V₁ is rectified and converted into the direct current V₁₁ by using the diode D7 and the diode D5 or the diode D4 and the diode D6 in the rectifier circuit 111.

The valley-fill PFC circuit 112 includes a first capacitor C1, a first diode D1, a second capacitor C2, a second diode D2, and a third diode D3. One end of the first capacitor C1 is connected to the positive output end of the rectifier circuit 111, the other end of the first capacitor C1 is connected to a cathode of the first diode D1, and an anode of the first diode D1 is connected to the reference ground. A cathode of the second diode D2 is connected to the positive output end of the rectifier circuit 111, an anode of the second diode D2 is connected to one end of the second capacitor C2 and a cathode of the third diode D3, the other end of the second capacitor C2 is connected to the reference ground, and an anode of the third diode D3 is connected to the cathode of the first diode D1.

The controllable switch Q1 is connected between the first capacitor C1 and the reference ground, and the controllable switch Q1 is connected in parallel to the first diode D1. When the controllable switch Q1 is turned on, the first capacitor C1 is connected to the reference ground. When the controllable switch Q1 is turned off, the first capacitor C1 is disconnected from the reference ground, and the first capacitor C1 is connected to the reference ground by using the first diode. In this embodiment of this application, an example in which the controllable switch Q1 is a triode is used for description. Specifically, the anode and the cathode of the first diode D1 are respectively connected to an emitter and a collector of the controllable switch Q1, and a base of the controllable switch Q1 is connected to the control circuit 114. It should be noted that other types of controllable switches also fall within the protection scope of this application.

The control circuit 114 is configured to control operation of the valley-fill PFC circuit 112 based on a type of the alternating current V₁ received by the power module 11. When the power module 11 receives a low-voltage alternating current, the control circuit 114 controls the valley-fill PFC circuit 112 not to perform power factor correction. When the power module 11 receives a high-voltage alternating current, the control circuit 114 controls the valley-fill PFC circuit 112 to perform power factor correction.

In this embodiment of this application, in response to a peak voltage of the direct current V₁₁ output by the rectifier circuit 111 or a peak voltage of the alternating current V₁ received by the rectifier circuit 111, the control circuit 114 determines the type of the alternating current V₁ received by the power module 11, and controls operation of the valley-fill PFC circuit 112.

In an embodiment, in response to that the peak voltage of the direct current V₁ output by the rectifier circuit 111 is less than a first voltage threshold, the control circuit 114 controls the controllable switch Q1 to be turned on, and the valley-fill PFC circuit does not perform power factor correction.

In an embodiment, in response to that the peak voltage of the alternating current V₁₁ received by the rectifier circuit 111 is greater than a second voltage threshold, the control circuit 114 controls the controllable switch Q1 to be turned on, and the valley-fill PFC circuit does not perform power factor correction.

In an embodiment, in response to that the peak voltage of the direct current V₁ output by the rectifier circuit 111 is greater than the first voltage threshold, the control circuit 114 controls the controllable switch Q1 to be turned off, and the valley-fill PFC circuit performs power factor correction.

In an embodiment, in response to that the peak voltage of the alternating current V₁₁ received by the rectifier circuit 111 is greater than the second voltage threshold, the control circuit 114 controls the controllable switch Q1 to be turned off, and the valley-fill PFC circuit performs power factor correction.

Correspondingly, a running process of the power module 11 shown in FIG. 10 is consistent with the schematics of the voltage and current waveforms shown in FIG. 6 and FIG. 8. Details are not described herein again.

When the power module 11 shown in FIG. 10 receives the low-voltage alternating current, the control circuit 114 controls the controllable switch Q1 to be turned on, and the valley-fill PFC circuit 112 does not perform power factor correction, so that power conversion efficiency of the power module 11 is improved. In addition, when the controllable switch Q1 is turned on, an initial discharging voltage of the first capacitor C1 may be raised, to raise a minimum value of the output voltage of the rectifier circuit 111, thereby increasing a minimum value of the input voltage of the direct-current conversion circuit 113, and improving applicability of the power module 11 and the electronic device 10 using the power module 11.

FIG. 11 is another schematic of a structure of a power module according to this application. A part in FIG. 11 that is the same as that in FIG. 10 is not described again. As shown in FIG. 11, an example in which a field-effect transistor Q1 is a MOSFET Q1 is used for description. A drain of the MOSFET Q1 is connected to the other end of the first capacitor C1, a source of the MOSFET Q1 is connected to the reference ground, and a gate of the MOSFET Q1 is connected to an output end of the control circuit 114.

In this embodiment of this application, the MOSFET Q1 includes a parasitic diode D1, and the drain and the source of the MOSFET Q1 are respectively a cathode and an anode of the parasitic diode D 1. It should be noted that an IBGT, a GaN transistor, or another transistor having a parasitic diode may also be used to replace the field-effect transistor Q1. Details are not described herein again. For example, in this embodiment of this application, the MOSFET may be replaced with the IGBT, and the drain, the source, and the gate of the MOSFET are: a collector, an emitter, and a gate of the IGBT.

Correspondingly, for a running process of the power module 11 shown in FIG. 11, refer to FIG. 7 and FIG. 9. Details are not described herein again.

In the power module 11 and an electronic device 10 using the power module 11 provided in embodiments of this application, not only the controllable switch Q1 may be connected in parallel to two ends of the first diode D1, but also the field-effect transistor Q1 with a parasitic diode may be used to replace the first diode D1 and the controllable switch Q1.

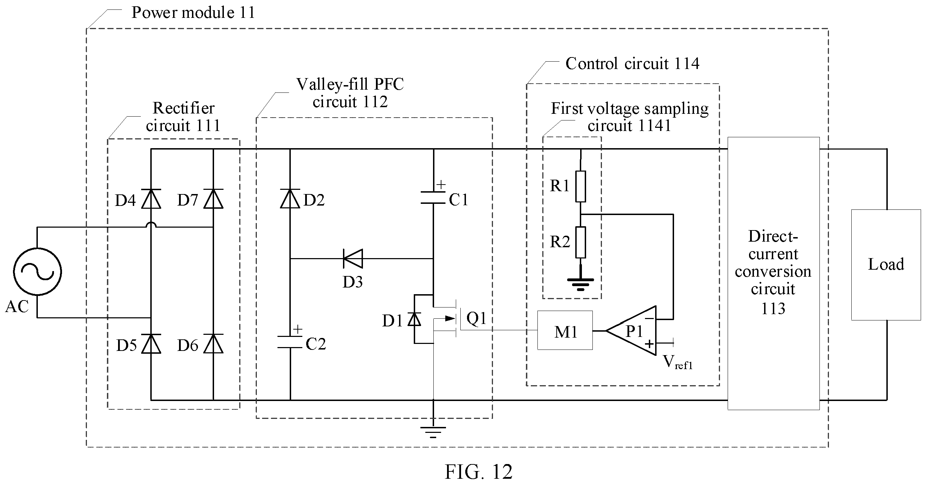

FIG. 12 is another schematic of a structure of a power module according to this application. A part in FIG. 12 that is the same as that in FIG. 11 is not described again. As shown in FIG. 12, the control circuit 114 includes a first voltage sampling circuit 1141, a first comparator P1, and a first driver (that is, a gate driver) M1. The first voltage sampling circuit 1141 includes R1 and R2. Afirst end of R1 (that is, both an input end of the first voltage sampling circuit 1141 and an input end of the control circuit 114) is connected to a positive output end of the rectifier circuit 111 and a positive input end of the direct-current conversion circuit 113. A second end of R1 (that is, an output end of the first voltage sampling circuit 1141) is connected to a first end of R2, and a second end of R2 is connected to the reference ground. The first end of the R2 is connected to an inverting input end of the first comparator P1, and a non-inverting input end of the first comparator P1 is connected to a voltage V_{ref1}. An output end of the first comparator P1 is connected to an input end of the first driver M1, and an output end of the first driver M1 (that is, an output end of the control circuit 114) is connected to the gate of the MOSFET Q1.

When the power module 11 runs, the first voltage sampling circuit 1141 starts to obtain, by collecting a voltage V_{R2} of the R2, a voltage of a direct current V₁₁ output by the rectifier circuit 111. The first comparator P1 compares V_{R2} with V_{ref1} based on V_{R2} input by the inverting input end, and outputs a level signal based on a comparison result. The level signal includes a high-level signal and a low-level signal. The first driver M1 outputs a drive signal to the gate of the MOSFET Q1 based on the level signal input by the first comparator P1, where the drive signal includes a turn-on signal and a turn-off signal.

In an optional embodiment, if a peak voltage of the output voltage V₁₁ of the rectifier circuit 111 is less than a first voltage threshold, and V_{R2} is less than V_{ref1}, the first comparator P1 outputs the high-level signal. The first driver M1 receives the high-level signal within preset duration, the first driver M1 outputs a turn-on signal to the gate of the MOSFET Q1, and the MOSFET Q1 is conducted. A running process of the power module 11 subsequent to turn-on of the MOSFET Q1 is consistent with the schematic of the voltage and current waveform shown in FIG. 7. Details are not described herein again.

In this embodiment of this application, the preset duration is greater than a power frequency period of 10 ms or 8.3 ms, so that it can be ensured that the peak voltage of the output voltage V₁₁ of the rectifier circuit 111 in a complete power frequency period is less than the first voltage threshold.

In another optional embodiment, if the output voltage V₁₁ of the rectifier circuit 111 is greater than the first voltage threshold, and V_{R2} is greater than V_{ref1}, the first comparator P1 outputs the low-level signal. The first driver M1 receives the high-level signal within preset duration. Correspondingly, the first driver M1 outputs a turn-off signal to the gate of the MOSFET Q1, and the MOSFET Q1 is cut off. For a running process of the power module 11 subsequent to cut-off of the MOSFET Q1, reference may be made to FIG. 9. Details are not described herein again.

According to the power module 11 provided in this embodiment of this application, the control circuit 114 shown in FIG. 12 detects the peak voltage of the direct current V₁₁ output by the rectifier circuit 111 and controls the MOSFET Q1. A structure of the control circuit 114 is simple, so that not only costs and a volume of the power module 11 can be reduced, but also stability of the power module 11 can be improved.

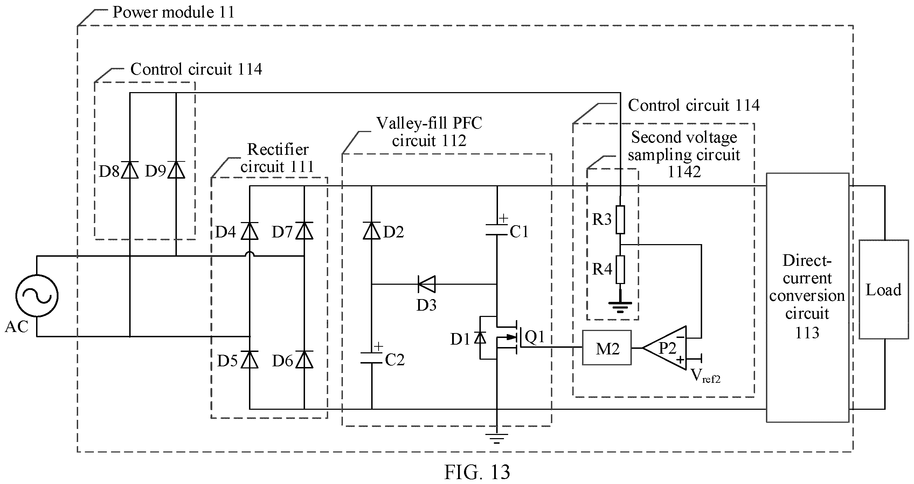

FIG. 13 is another schematic of a structure of a power module according to this application. As shown in FIG. 13, the control circuit 114 includes rectifier diodes D8 and D9, a second voltage sampling circuit 1142, a second comparator P2, and a second driver (that is, a gate driver) M2. An anode of the rectifier diode D8 and an anode of the rectifier diode D9 are used to receive an alternating current V₁, and a cathode of the rectifier diode D8 is connected to a cathode of the rectifier diode D9 and then connected to an input end of the second voltage sampling circuit 1142. The second voltage sampling circuit 1142 includes a resistor R3 and a resistor R4. A first end of the resistor R3 is used as the input end of the second voltage sampling circuit 1142, and is connected to an output end of a second rectifier circuit 1032, a positive output end of the rectifier circuit 111, and a positive input end of the direct-current conversion circuit 113. A second end of the resistor R3 is used as an output end of the second voltage sampling circuit 1142, and is connected to a first end of the resistor R4. A second end of the resistor R4 is connected to the reference ground. The first end of the resistor R4 is connected to an inverting input end of the second comparator P2, and a non-inverting input end of the second comparator P2 is connected to a voltage V_{ref2}. An output end of the second comparator P2 is connected to an input end of the second driver M2, and an output end of the second driver M2 is used as an output end of the control circuit 114, and is connected to the gate of the MOSFET Q1.

When the power module 11 runs, the rectifier diode D8 and the rectifier diode D9 perform rectification conversion on the alternating current V₁ and output a converted current to the second voltage sampling circuit 1142. The second voltage sampling circuit 1142 collects a voltage V_{R4} of the resistor R4, to detect a peak voltage of the alternating current V₁. The second comparator P2 compares V_{R4} with V_{ref2} based on V_{R4} input by the inverting input end, and outputs a level signal based on a comparison result. The level signal includes a high-level signal and a low-level signal. The second driver M2 outputs a drive signal to the gate of the MOSFET Q1 based on the level signal input by the second comparator P2. The drive signal of the second driver M2 includes a turn-on signal and a turn-off signal.

In an embodiment, the peak voltage of the alternating current V₁ is less than a second voltage threshold, V_{R4} is less than V_{ref2}, and the second comparator P2 outputs a high-level signal. The second driver M2 receives the high-level signal within preset duration, the second driver M2 outputs a turn-on signal to the gate of the MOSFET Q1, and the MOSFET Q1 is conducted. For a running process of the power module 11 subsequent to turn-on of the MOSFET Q1, reference may be made to FIG. 7. Details are not described herein again.

In an embodiment, the peak voltage of the alternating current V₁ is greater than the second voltage threshold, V_{R4} is greater than V_{ref2}, and the second comparator P2 outputs a low-level signal. The second driver M2 receives the low-level signal, and the second driver M2 outputs a turn-off signal to the gate of the MOSFET Q1, so that the MOSFET Q1 is cut off. For a running process of the power module 11 subsequent to cut-off of the MOSFET Q1, reference may be made to FIG. 9. Details are not described herein again.

According to the power module 11 provided in this embodiment of this application, the control circuit 114 shown in FIG. 13 may detect the peak voltage of the alternating current V₁ and control the MOSFET Q1. A structure of the control circuit 114 is simple, so that not only costs and a volume of the power module 11 can be reduced, but also stability of the power module 11 can be improved.

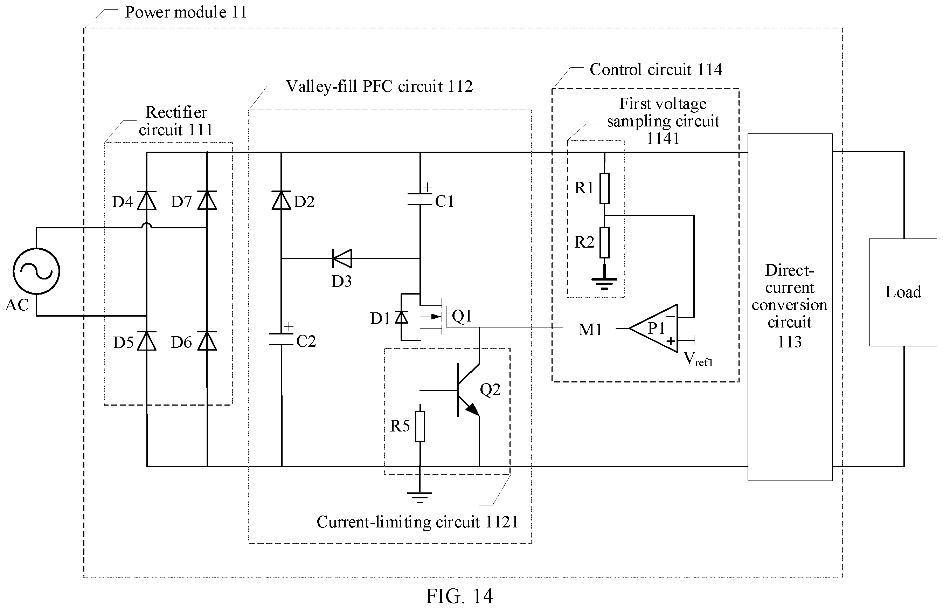

FIG. 14 is another schematic of a structure of a power module according to this application. A part in FIG. 14 that is the same as that in FIG. 13 is not described again. As shown in FIG. 14, the valley-fill PFC circuit 112 includes a current-limiting circuit 1121. The current-limiting circuit 1121 is connected to the source and the gate of the MOSFET Q1. The current-limiting circuit 1121 includes a detection resistor R5 and a triode Q2. The source of the MOSFET Q1 is separately connected to one end of the R5 and a base of the Q2, and the other end of the R5 is connected to the reference ground. The gate of the MOSFET Q1 is connected to a collector of the Q2, and an emitter of the Q2 is connected to the reference ground.

Specifically, when detecting that the peak voltage of the direct current V₁₁ output by the rectifier circuit 111 is less than the first voltage threshold, the control circuit 114 controls the MOSFET Q1 to be conducted. The current-limiting circuit 1121 detects a voltage on R5 by using a BE junction of the Q2. When the voltage on R5 exceeds a turn-on voltage of the BE junction, it indicates that a current of the MOSFET Q1 is greater than a current threshold. Correspondingly, the collector of the Q2 pulls down a gate voltage of the MOSFET Q1, to limit the current of the MOSFET Q1. It should be noted that R5 is used to detect the current of the MOSFET Q1, and therefore a voltage of R5 may be ignored. For a running process of the power module 11 in FIG. 14, reference may be made to FIG. 7 and FIG. 9. Details are not described herein again.

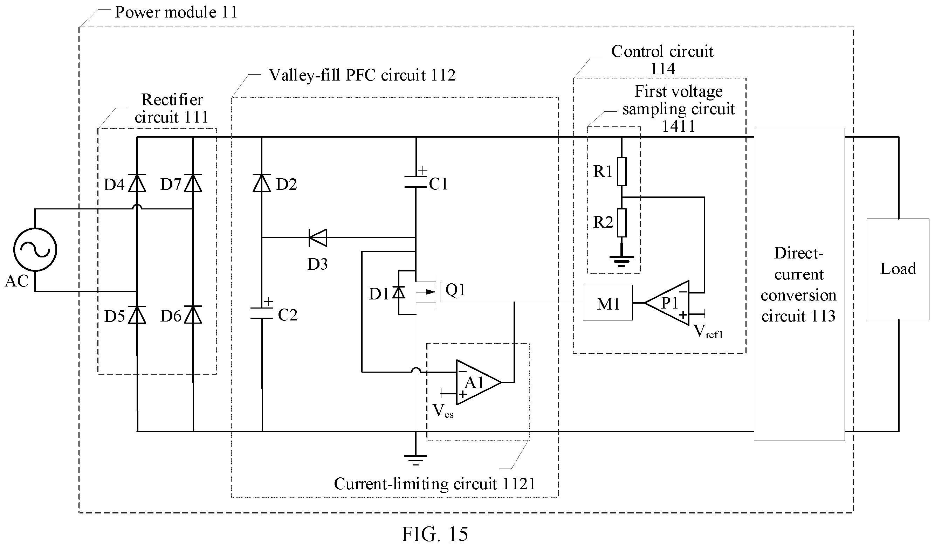

FIG. 15 is still another schematic of a structure of a power module according to this application. A part in FIG. 15 that is the same as that in FIG. 13 is not described again. As shown in FIG. 15, the valley-fill PFC circuit 112 further includes a current-limiting circuit 1121. The current-limiting circuit 1121 includes an operational amplifier A1, and the current-limiting circuit 1121 is connected to the drain and the gate of the MOSFET Q1. An inverting input end and a non-inverting input end of the operational amplifier A1 are connected to the drain of the MOSFET Q1 and a voltage V_{cs}, and an output end is connected to the gate of the MOSFET Q1.

Specifically, when detecting that the peak voltage of the direct current V₁₁ output by the rectifier circuit 111 is less than the first voltage threshold, the control circuit 114 controls the MOSFET Q1 to be conducted. When a drain-source voltage drop of the MOSFET Q1 is greater than a current-limiting threshold V_{cs}, it indicates that a current of the MOSFET Q1 is greater than a current threshold. The operational amplifier A1 detects that the drain-source voltage drop of the MOSFET Q1 is greater than the current-limiting threshold V_{cs}, and outputs a first voltage to the gate of the MOSFET Q1, to pull down a gate voltage of the MOSFET Q1 by using the first voltage output by the operational amplifier A1, thereby limiting the current of the MOSFET Q1. For a running process of the power module 11 in FIG. 15, reference may be made to FIG. 7 and FIG. 9. Details are not described herein again.

In this embodiment of this application, the power module 11 may implement overcurrent protection on the MOSFET Q1 by adding the current-limiting circuit 1121 to the valley-fill PFC circuit 112, so that stability of the power module 11 is improved, and a service life of the power module 11 is prolonged.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power module, comprising:
a rectifier circuit, configured to: receive and rectify an alternating current, and output a direct current;
a valley-fill power factor correction circuit, configured to adjust a power factor of the rectifier circuit, comprising a plurality of capacitors and a plurality of diodes, wherein the plurality of capacitors and some diodes of the plurality of diodes form a series-connected charging loop, or the plurality of capacitors and the other diodes of the plurality of diodes form parallel-connected discharging loops;
a controllable switch, connected between one capacitor and a reference ground and connected in parallel to one diode, wherein when the controllable switch is turned on, the capacitor is connected to the reference ground; and
a control circuit, configured to control, depending on a type of the alternating current, the controllable switch to be turned on or off, wherein the type of the alternating current is a high-voltage alternating current or a low-voltage alternating current depending on a peak voltage.

2. The power module according to claim 1, wherein the control circuit is configured to control, in response to that a peak voltage of the direct current is less than a first voltage threshold, or in response to that the peak voltage of the alternating current is less than a second voltage threshold, the controllable switch to be turned on; and
the second voltage threshold is greater than or equal to the first voltage threshold.

3. The power module according to claim 1 or 2, wherein the control circuit is configured to control, in response to that the peak voltage of the direct current is greater than the first voltage threshold, or in response to that the peak voltage of the alternating current is greater than the second voltage threshold, the controllable switch to be turned off.

4. The power module according to any one of claims 1 to 3, wherein the valley-fill power factor correction circuit comprises a first capacitor, a second capacitor, a first diode, a second diode, and a third diode; and the first capacitor, the third diode, and the second capacitor form a series-connected charging loop, or the first capacitor and the first diode form a first discharging loop, the second capacitor and the second diode form a second discharging loop, and the first discharging loop is connected in parallel to the second discharging loop.

5. The power module according to claim 4, wherein the controllable switch is connected in parallel to the first diode.

6. The power module according to claim 4, wherein the controllable switch is a field-effect transistor.

7. The power module according to claim 6, wherein the first diode is a parasitic diode of the field-effect transistor.

8. The power module according to any one of claims 4 to 6, wherein a capacitance value of the first capacitor is greater than or equal to a capacitance value of the second capacitor

9. A control circuit used for a power module, wherein the power module comprises a rectifier circuit, a valley-fill power factor correction circuit, and a controllable switch; the rectifier circuit is configured to: receive and rectify an alternating current, and output a direct current; the valley-fill power factor correction circuit is configured to adjust a power factor of the rectifier circuit, the valley-fill power factor correction circuit comprises a plurality of capacitors and a plurality of diodes, and the plurality of capacitors and some diodes of the plurality of diodes form a series-connected charging loop, or the plurality of capacitors and the other diodes of the plurality of diodes form parallel-connected discharging loops; the controllable switch is connected between one capacitor and a reference ground, and is connected in parallel to one diode; and the control circuit is configured to control, depending on a type of the alternating current, the controllable switch to be turned on or off, and the type of the alternating current is a high-voltage alternating current or a low-voltage alternating current depending on a peak voltage.

10. The control circuit according to claim 9, wherein the control circuit is configured to control, in response to that a peak voltage of the direct current is less than a first voltage threshold, or in response to that the peak voltage of the alternating current is less than a second voltage threshold, the controllable switch to be turned on; and
the second voltage threshold is greater than or equal to the first voltage threshold.

11. The control circuit according to claim 9 or 10, wherein the control circuit is configured to control, in response to that the peak voltage of the direct current is greater than the first voltage threshold, or in response to that the peak voltage of the alternating current is greater than the second voltage threshold, the controllable switch to be turned off.

12. The control circuit according to claims 9 to 11, wherein the controllable switch is a field-effect transistor.

13. The control circuit according to any one of claims 9 to 12, wherein the valley-fill power factor correction circuit comprises a first capacitor, a second capacitor, a first diode, a second diode, and a third diode; and the first capacitor, the third diode, and the second capacitor form a series-connected charging loop, or the first capacitor and the first diode form a first discharging loop, the second capacitor and the second diode form a second discharging loop, and the first discharging loop is connected in parallel to the second discharging loop.

14. The control circuit according to claim 13, wherein the first diode is a parasitic diode of the field-effect transistor.

15. An electronic device, wherein the electronic device comprises the power module according to any one of claims 1 to 8 or the control circuit according to any one of claims 9 to 14.
